# EUROPÄISCHE PATENTSCHRIFT

(11) **EP 3 784 947 B1**
(45) Veröffentlichungstag und Bekanntmachung des Hinweises auf die Patenterteilung: **24.05.2023**
(21) Anmeldenummer: 19720520.6
(22) Anmeldetag: 24.04.2019
(51) Int. Cl.: F16L 41/12, F16L 41/14

(54) **ROHRANSCHLUSSSYSTEM UND VERFAHREN ZUR HERSTELLUNG EINES ROHRANSCHLUSSES**
PIPE CONNECTION SYSTEM AND METHOD FOR PRODUCING A PIPE CONNECTION
SYSTÈME DE RACCORDEMENT DE TUYAUX ET PROCÉDÉ DE FABRICATION D'UN RACCORD DE TUYAUX

(30) Priorität: 25.04.2018 DE 102018109998
(43) Veröffentlichungstag der Anmeldung: 03.03.2021
(73) Patentinhaber: Pipe-Aqua-Tec GmbH & Co.KG, 68199 Mannheim (DE)
(72) Erfinder: BLOSSÉ, Robert, 15517 Fürstenwalde (DE); LEDDIG-BAHLS, Susanne, 17121 Rustow (Loitz) (DE); LOOGEN, Sven, 44147 Dortmund (DE); WAHR, Jens, 47051 Duisburg (DE)
(74) Vertreter: ETL IP Patent- und Rechtsanwaltsgesellschaft mbH
(86) Internationale Anmeldenummer: PCT/EP2019/060463
(87) Internationale Veröffentlichungsnummer: WO 2019/206962

(56) Entgegenhaltungen:
- EP-A2- 0 339 156
- DE-A1-102008 000 049
- DE-U1-202016 106 327
- JP-B2- 3 620 911

## Beschreibung

### Anwendungsgebiet und Stand der Technik

Die Erfindung betrifft ein Rohranschlusssystem mit einer außen auf eine mit einem Liner versehene Rohrleitung aufzusetzenden Rohrschelle, einem eine Bohrung in der mehrschichtigen Wandung der Rohrleitung durchdringenden, mit einem Anschlussrohr verbindbaren Rohranschlussstutzen, der einen Flanschbund von größerem Durchmesser als die Bohrung aufweist, und mit einer Dichtung zwischen der Innenwandung der Rohrleitung und dem Rohranschlussstutzen. Ferner wird ein Verfahren zur Herstellung eines solchen Rohranschlusses vorgeschlagen.

Ein nachträglicher Anschluss von Abgangsleitungen, zum Beispiel für einen Hausanschluss, an bestehende Versorgungsleitungen für Trinkwasser o.dgl. ist häufig notwendig, insbesondere aber dann, wenn Altrohre zur Sanierung mit einer inneren Auskleidung, einem sogenannten Liner, versehen werden. Dies erfolgt durch das Aufsetzen einer Rohrschelle oder Anbohrarmaturen, mittels derer nach dem Herstellen der Bohrung, je nach Rohrwerkstoff, eine Bohrlochhülse oder Bohrloch-Dichthülse gesetzt wird, die direkt im Bohrloch abdichtet. Anbohrarmaturen sind in vielfältiger Ausführung hinsichtlich ihrer konstruktiven Gestaltung und der daraus resultierenden Anwendungsmöglichkeiten im Einsatz. Sie beziehen sich auf die verschiedenen Werkstoffe und die jeweilige Ausführung der Versorgungsleitung, auf ihre Nennweiten bzw. die Nennweite der Abgangsleitung, speziell aber auf die Ausführung mit oder ohne Hilfs-/Betriebsabsperrung, mit oder ohne integriertem Bohrer/Fräser.

Die bekannten Anbohrarmaturen stellen die Dichtigkeit beim Anbohren einfacher Versorgungsleitungen mit einschichtiger Wandung, wie Stahl - oder Kunststoffrohre, über im Bohrloch abdichtende Hülsen sicher. Ergänzende Ausführungen enthalten zum Beispiel die DE 195 31 913 A1 und die DE 196 23 004 A1, wo die Abdichtung des Anschlusses an einer Versorgungsleitung aus Kunststoff durch Erhitzen der ebenfalls aus Kunststoff bestehenden Anbohrarmatur an ihrer Rohrauflagefläche (Aufschmelzen) erfolgt. Auch bei der DE 198 05 362 A1 erfolgt die Abdichtung an der Außenfläche durch ein nutgeführtes Dichtelement im Auflagebereich der Anbohrarmatu r.

Wird jedoch eine mehrschichtige Versorgungsleitung angebohrt, liegen dann im Bereich der entstehenden Schnittfläche der Bohrung die Grenzflächen der durchtrennten Schichten der Rohrwandung frei, so dass das Medium dort eintreten und zwischen zwei benachbarte Schichten der Rohrwandung gelangen kann (Hinterwanderung). Zur Verhinderung einer möglichen Unterwanderung bzw. Beschädigung einer innen oder außen liegenden Schutzschicht der Versorgungsleitung sind verschiedene konstruktive Maßnahmen bekannt.

So wird bei der EP 2 048 426 A1 analog zu DE 196 23 004 A1 bei einer zwei- oder mehrschichtigen Kunststoff-Rohrleitung (herstellungsbedingter Verbund) das Sattelstück auf die Hauptleitung aufgesetzt und durch Erwärmen stoffschlüssig verbunden. Die Abdichtung des beim Bohren zwischen den Schichten entstehenden Spaltes erfolgt jedoch, indem ein integriertes Heizelement im Bohrer den Bereich der Bohrlochwandung aufschmilzt, so dass der geschmolzene Kunststoff nach Erkalten den Spalt abdichtet.

Die DE 93 16 819 U1 beschreibt eine Lösung für metallische Rohrleitungen mit einer äußeren und einer inneren Schutzschicht aus Zement. Die Abdichtung erfolgt an der Bohrlochwandung über eine radial wirkende Ringdichtung, die im entspannten Zustand in das Bohrloch einführbar ist und durch eine Relativbewegung zweier Gewindehülsen in einem Hülsensystem im gespannten Zustand eine radial wirkende Abdichtung an der Bohrlochwand erzeugt.

Die DE 199 33 977 A1 beschreibt die Anbindung eines Anschlussrohres an ein mittels eines Reliningrohres aus Kunststoffmaterial saniertes Hauptrohr (Versorgungsrohr). Das Anbohren und der Anschluss des Abgangsrohres erfolgt hierbei jedoch, bevor das Reliningrohr eingezogen wird. Nach dem Einziehen und Angleichen des Liners an die Hauptrohrwand erfolgt das Lokalisieren der Bohrung von innen und das Erzeugen einer Öffnung in dem Reliningrohr durch Erwärmen mittels eines Heizkopfes und daran ein anschließendes Aufweiten und Andrücken des Reliningmaterials an den Bohrungsbereich und den Innenbereich des Anschlussrohres. Hervorgehoben wird, dass die Abdichtung ohne zusätzliches Material erfolgt. Für das Lokalisieren der Bohrung und für die nachfolgenden Arbeitsschritte wird eine spezielle Verfahreinrichtung (Roboter) beschrieben. Das Verfahren ist auf Rohre mit freien Linern beschränkt, da der Liner unabhängig von der eigentlichen äußeren Wand beweglich sein muss. Bei einem mehrschichtigen Rohr, bei dem die Schichten einen festen Verbund bilden (stoffschlüssige Verbindung) ist das Verfahren demzufolge nicht anwendbar.

Die DE 203 05 736 U1 beschreibt eine Anbohrarmatur für Rohrleitungen mit einer oder mehreren Innen- oder Außenschichten aus Zement o.dgl.. Die Abdichtung erfolgt über einen mit der Armatur verbundenen, in das Bohrloch ragenden Stutzen als Dichthülse, der seinerseits aus einer Außenhülse und einer darin einschraubbaren Innenhülse gebildet wird. An der Innenhülse ist ein Dichtelement angeordnet, das sich axial an der Außenhülse und der Innenhülse abstützt und durch Verschrauben der beiden Hülsen die Abdichtung durch radiale Aufweitung des Dichtungselementes realisiert. Die Abdichtung auf der Außenseite des Hauptrohres erfolgt durch Verformung eines Dichtelementes beim Verspannen der Anbohrbrücke.

Die DE 10 2006 004 797 B3 beschreibt einen Verschlussstutzen für vorzugesweise metallische Rohrleitungen, insbesondere mit einer oder mehreren Innenschichten aus Zement o.dgl., der ebenfalls aus einer Außenhülse mit einem Innengewinde und einer darin einschraubbaren Innenhülse mit entsprechendem Außengewinde besteht. Durch Verschrauben der beiden Hülsen gegeneinander wird ein zwischen der Rohrbohrungswand und der Innenhülse angeordnetes Dichtelement verquetscht und dichtet das Bohrloch durch seine radiale Verformung ab.

Die DE 20 2016 106 327 U1 beschreibt eine Rohrleitungs-Bohrloch-Dichthülse, die eine Außenhülse mit einem eine Außenschulter ausbildenden, in radialer Richtung elastisch verformbaren Hülsenkopf und eine formstabile Innenhülse aufweist. Am vorderen Ende der Außenhülse ist ein Hülsenkopf ausgebildet, der zum rückwärtigen Ende der Außenhülse hin eine Schulter ausweist, die später als Anlagefläche dient. Der Hülsenkopf ist im Durchmesser größer als der Innendurchmesser der Hülse und elastisch verformbar und besitzt Schlitze, die durch Zusammendrücken ein Durchführen durch die Hülse ermöglichen und an der Innenwandung des Rohres durch Rückfederung ihre ursprüngliche Form wieder einnehmen und dadurch die Abdichtung des Bohrloches realisieren. Eine ringförmige Dichtung ist zwischen Rohraußenwand und Spannbrücke angeordnet.

Die EP 0 603 775 A1 beschreibt einen unter verschiedenem Winkel anschließbares Abgangsrohr, wobei das Hauptrohr als Kanalrohr aus Beton und einem inneren Kunststoffrohr besteht. Das beschriebene Dichtungssystem beinhaltet eine Dichtungshaltekammer mit speziell ausgebildeter, eingestülpter Ringdichtung mit Dichtungslippe. Die Ringdichtung ist winkelförmig, und mit einer Verdickung so ausgebildet, dass sie beim Eindringen in den Rohrraum ausstülpt und durch das axiale Anziehen die Bohrung abdichtet. Das System wird verspannt und die Bohrung von außen zusätzlich über Kunstschaum abgedichtet.

Die EP 2 048 426 A2 beschreibt eine Anbohrarmatur, die im Bereich des Bohrers Mittel aufweist, um mindestens einen im Bereich der Schnittfläche einer angebohrten mehrschichtigen Rohrleitung durch das Anbohren entstehenden Spalt zwischen zwei aneinander grenzenden Schichten der mehrschichtigen Wand zu verschließen. Die Erfindung beinhaltet eine in dem Bohrer integrierte Heizwendel, die nach dem Bohrvorgang durch Aufschmelzen der Rohrwandung diese im Bereich der Schnittfläche abdichtet. Diese Ausführung ist für zwei-, drei- oder mehrschichtige Rohrleiungen aus thermoplastischen Kunststoffen vorgesehen. Unter mehrschichtiger Rohrleitung wird hier verstanden, dass die Schichten herstellungsbedingt einen Verbund bilden, also stoffschlüssig hergestellt werden. Die äußere Abdichtung erfolgt ähnlich EP 2 048 426 A1 durch ein Aufschmelzen eines Kontaktbereiches des Sattelstückes mit der Rohroberfläche als formschlüssige Verbindung. Weitere Rohranschlusssysteme sind in JP 3 620911 B2, EP 0 339 156 A2, DE 10 2008 000049 A1 und DE 20 2016 106327 U1 offenbart.

### Aufgabe und Lösung

Aufgabe der Erfindung ist es, ein Rohranschlusssystem zu schaffen, das es ermöglicht, ein Anschlussrohr zuverlässig und leicht anzubringen und dabei nicht nur eine Dichtung zum Rohräußeren, sondern auch eine Sicherheit gegen Hinterwanderung der mehrschichtigen Wandung, also Eindringen des Mediums zwischen Rohr und Liner zu schaffen.

Diese Aufgabe wird durch die Merkmale der unabhängigen Ansprüche gelöst.

Bei der Erfindung ist also die Dichtheit weder davon abhängig, dass die Dichtung an der Bohrungs-Innenwand, also der Schnittfläche in der mehrschichtigen Rohrleitung sauber abdichtet, noch muss die Dichtung beim Einbau in die komplizierte Form des Bohrungsdurchbruchs verformt werden oder selbst eine Form mit ungleicher Dicke haben. Der Flanschbund hat an seiner dem Liner zugekehrten Seite selbst die Form einer der Form des Bohrungsdurchbruchs angepassten Rinne, die entsprechend einer sich aus dem Durchmesser der kreisrunden Bohrung und dem Durchmesser der ebenfalls kreisrunden Rohrleitung ergebenden Durchdringungskurve geformt ist. Die Verdrehsicherung zwischen Rohrschelle und Rohranschlussstutzen, vorzugsweise zwei einander gegenüberliegende Abflachungen an diesen Teilen, sorgt dafür, dass die Form des Flanschbundes und des Bohrungsrandes im Rohr bei der Montage genau zusammenpassen. Dementsprechend wird eine Dichtung ähnlich einem O-Ring verwendet werden, die jedoch, weil durch die Form der Durchdringungskurve die Umfangs-Ringform nicht ganz kreisförmig ist, die Form eines ovalen Ringes haben sollte.

Der Rohranschlussstutzen und ggf. weitere Teile des Rohranschlusssystems können aus Kunststoffspritzguss bestehen. Dann ist es auch möglich, die Dichtung stoffschlüssig durch ein 2-Komponenten-Spritzverfahren direkt an dem Flanschbund anzubringen. Besonders bevorzugt kann der äußere, dem Liner zugekehrten Schenkel der die Dichtung aufnehmende Rinne so gestaltet sein, dass er die Dichtung sicher führt. Erfindungsgemäß ist der Schenkel so gestaltet, dass er fast bis zum Liner reicht, die den die Dichtung enthaltenden Ringsraum fast vollständig abschließt. Durch die vom Rohrinneren her auf dem inneren Bohrungsrand aufliegende und abdichtende Dichtung ist die Aufgabe erfüllt, den Anschluss sowohl gegen Austritt des in der Rohrleitung geführten Mediums ins Freie, als gegen den Eintritt des Mediums zwischen die Schichten des Rohrmantels abzudichten.

Bei dieser Ausführungsform der Erfindung wird der Rohranschlussstutzen vom Rohrinneren her in die Bohrung und damit in die Rohrschelle eingeführt und durch die Verdrehsicherung in die genau passende Position gebracht. Das kann gemäß dem Verfahren zur Herstellung des Rohranschlusses über ein Ende oder eine Öffnung der Rohrleitung mittels eines Röhrenaals mit Zugkopf, einer Einziehspirale oder eines Röhren-Roboters geschehen, die den Rohranschlussstutzen in eine in die Bohrung einführbare Position bringen. Der Rohranschlussstutzen weist ein Außengewinde auf, über das eine sich auf der Rohrschelle abstützende Gewindemutter den Rohranschlussstutzen mit seinem Flanschbund über die Dichtung an den Liner anpresst, wobei ggf. das Anschlussrohr mittels einer auf das Außengewinde aufgeschraubten Überwurfmutter an den Rohranschlussstutzen anschließbar ist.

Bei einer weiteren vorteilhaften Ausführungsform der Erfindung kann der Rohranschlussstutzen in seinem dem Rohrinneren zugekehrten Endberreich im Durchmesser flexibel veränderlich sein. Er ist vorzugsweise aus einem zwar gestaltfesten, jedoch flexiblen Material, vorzugsweise Kunststoff, hergestellt. In dem Endbereich kann er zur Bildung flexibler Stege mit Schlitzen versehen sein. Die Stege trennen auch den Flanschbund in einzelne Segmente. Diese können Einführungs-Abschrägungen aufweisen, die dazu ausgebildet sind, beim Einführen in die Bohrung von außen her durch einen gleitenden Kontakt mit der Bohrungswandung den Flanschbund auf den Bohrungsdurchmesser zusammenzudrücken. Durch ihre Flexibilität springen sie nach dem Durchqueren der Bohrung wieder in ihre ursprüngliche Lage, also nach außen, auseinander und bilden einen durch die Schlitze unterbrochenen Flanschbund. Dieser wird durch eine zumindest dem Endbereich vorgesehene weichelastische Ummantelung, die ggf. die Schlitze ausfüllt und die Dichtung bildet, wieder vervollständigt.

Die Ummantelung, die bevorzugt aus einem Elastomer besteht, kann in einem 2-Komponenten-Spritzvorgang stoffschlüssig mit dem Rohranschlussstutzen verbunden sein, so dass sich die Verbindung zwischen Ihnen weder bei angemessenen Druck-, Zug- oder Scherkräften löst. Sie kann auch die Schlitze zwischen den Stegen des Rohranschlussstutzens ausfüllen. Beim Zusammendrücken verformen sich diese Bereiche etwas, gehen aber nach der Ausdehnung wieder in ihre Herstellungs-Position zurück.

Eine weitere bevorzugte Ausführungsform ist eine Herstellung des Rohranschlussstutzens mit einem derart verjüngten Endbereich, dass der Flanschbund in diesem Zustand einen Durchmesser hat, der gleich oder kleiner als der Bohrungsdurchmesser ist. Der Rohranschlussstutzen kann also von außen her ohne Widerstand und ohne Verformung in die Bohrung eingeführt werden. Die Aufweitung auf den Endzustand, in dem der Flanschbund mit Dichtung die Bohrung hintergreift, kann dann mit Hilfe einer Innenhülse erfolgen, die von außen her in den Rohranschlussstutzen eingeführt und dort fixiert wird. Die ggf. umspritzte Ummantelung dehnt sich entsprechend.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Die Unterteilung der Anmeldung in einzelne Abschnitte sowie Zwischenüberschriften beschränken die unter diesen gemachten Aussagen nicht in ihrer Allgemeingültigkeit.

### Kurzbeschreibung der Zeichnungen

Ausführungsbeispiele der Erfindung sind in der Zeichnung dargestellt und werden im Folgenden näher erläutert. Es zeigen:
- Fig. 1: einen Längsschnitt durch eine Rohrleitung mit einem Liner und einem Rohranschluss nach der Erfindung,
- Fig. 1a: ein Detail aus Fig. 1,
- Fig. 2: einen Querschnitt nach der Linie II-II in Fig. 1,
- Fig. 3: einer Seitenansicht eines Rohranschlussstutzens mit geschlitztem Endbereich vor der Umspritzung mit der Ummantelung gemäß Figur. 4,
- Fig. 4: eine Seitenansicht entsprechend Fig. 3 der elastomerischen Ummantelung,
- Fig. 5 und 6: die in Fig. 3 und 4 gezeigten Teile in Schrägansicht,
- Fig. 7: eine Draufsicht auf den Rohranschlussstutzen,
- Fig. 8: je eine halbseitige Seitenansicht und Schnitt nach der Linie VIII-VIII in Fig. 7,
- Fig. 9: eine Draufsicht entsprechend Fig. 7,
- Fig. 10: einen Längsschnitt durch den Rohranschlussstutzen mit Umspritzung durch die Ummantelung,
- Fig.11: einen Längsschnitt durch den Rohranschlussstutzen gemäß Fig. 10 während des Einführens in eine Bohrung der Rohrleitung und
- Fig.12: einen Längsschnitt gemäß Fig. 11 nach dem Einführen.

### Detaillierte Beschreibung bevorzugter Ausführungsbeispiele

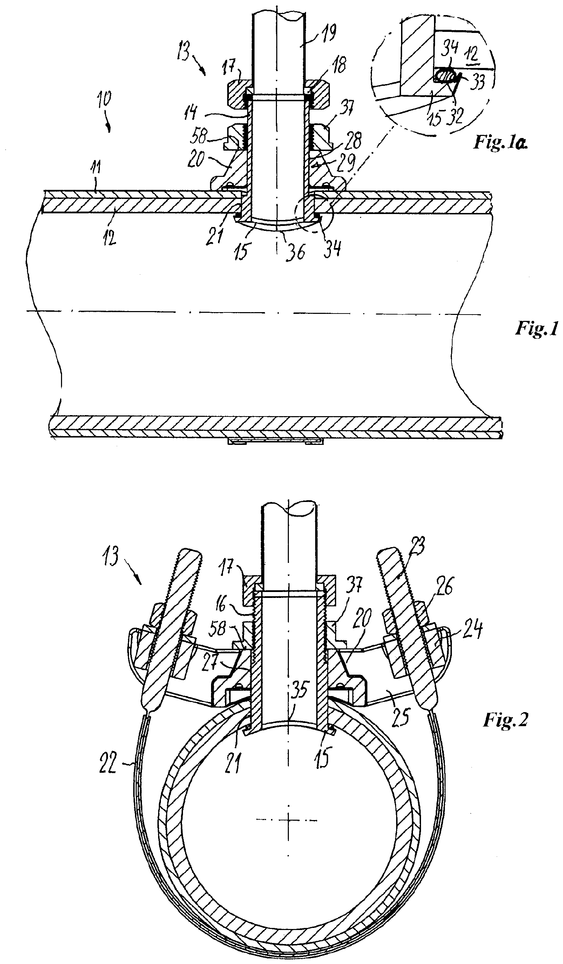

Fig. 1 und zwei zeigen eine Rohrleitung 10, beispielsweise ein Hauptrohr einer Trinkwasserleitung, das aus einem die Rohr 11 aus metallischem Werkstoff besteht und innen zur Sanierung mit einem so genannten Liner 12 ausgekleidet ist. Mithilfe des Liner-Verfahrens können komplexe Rohrleitungssysteme dauerhaft aufgrabungsfrei saniert werden. Bei diesem Verfahren wird z.B. ein Schlauchliner, z.B. ein glasfaserverstärkter Nadelfilzschlauch, dessen Länge der insgesamt zu sanierenden Rohrlänge entspricht, mit einem aushärtenden Kunststoff, wie Epoxidharz, getränkt und über eine Reversionstrommel in die zu sanierende Rohrleitung gestülpt. Nach der Aushärtung müssen aber alle Abzweigungen und Rohranschlüsse, zum Beispiel Abgänge für Hausanschlüsse, neu gesetzt werden.

Einen solchen Rohranschluss zeigen Fig.1 und 2 in Form eines Rohranschlusssystems 13 nach der Erfindung. In die Rohrleitung 10, d.h. durch das Rohr elf und den Liner 12 hindurch wird für den Rohranschluss eine Bohrung 21 gebohrt. Dazu kann eine spezielle Anbohrarmatur als Führung verwendet werden. Die im Folgenden beschriebene Rohrschelle13 weist einen Rohranschlussstutzen 14 auf, der eine zylindrische Form mit einem Flanschbund 15 an einem Ende und einem Außengewinde 16 zum anderen Ende hin hat. Über dieses Außengewinde16 kann mittels einer Überwurfmutter 17 und Stirndichtung 18 ein Anschlussrohr 19 fluchtend und dichtend angebracht werden. Hier kann auch eine Absperrarmatur, z.B. ein Kugel-Eckventil o.dgl. angeschlossen werden.

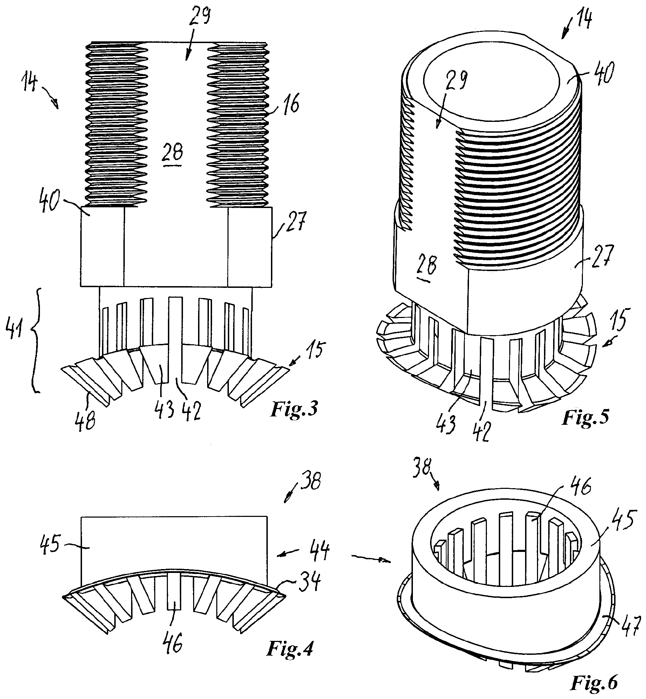

Der Rohranschlussstutzen 14 durchragt eine Rohrschelle 20, die passend zur Bohrung 21 auf das Äußere des Rohrs 11 aufgesetzt und ggf. mittels eines Spannbandes 22 sicher und ausgerichtet auf dem Rohr 11 platziert ist. Das Spannband 22 endet auf beiden Seiten in je einer Gewindestange 23, die durch je eine Führung 24 an Haltebügel bildenden Armen 25 der Rohrschelle 20 hindurchreicht und dort mittels je einer Spannmutter 26 angespannt werden kann. Der Rohranschlussstutzen 14 ist in der Rohrschelle 20 in seiner Längsrichtung gleitend geführt, und zwar in seinem mittleren Führungsbereich 27, der einen geringfügig größeren Durchmesser hat als das Außengewinde 16 (siehe hierzu Fig. 3 und 5). In diesem Bereich und auch über das Außengewinde hinweg ist eine Abflachung 28 vorgesehen, die zusammen mit einer entsprechenden Ausbildung in der Rohrschelle 20 eine Verdrehsicherung 29 für den Rohranschlussstutzen 14 in der Rohrschelle 20 bildet. Damit ist der Rohranschlussstutzen 14 über die Rohrschelle 20 nicht nur mit seiner Achse 30 winkelrecht zur Rohrachse 31 ausgerichtet, sondern auch in Bezug auf eine Drehung um seine Achse 30 gesichert. Die Verdrehsicherung kann auch durch einen Vorsprung am Rohranschlussstutzen 14 und eine entsprechende Nut in der Rohrschelle realisiert werden. Damit würde ermöglicht werden, dass durch die Rohrschelle hindurch ein Bohrwerkzeug geführt wird.

Wie die Fig. 1 und 2 und insbesondere Fig. 1a zeigen, hat der Flanschbund 15 einen Außendurchmesser, der größer ist als der Durchmesser der Bohrung 21 und den Querschnitt einer Rinne 32 mit einem äußeren Schenkel 33. In der Rinne liegt eine Dichtung 34 ähnlich einem O-Ring. In Umfangsrichtung des Rohranschlussstutzens 14 hat jedoch der Flanschbund 15 und damit auch die die Dichtung aufnehmende und führende Rinne 32 eine geschwungene Gestalt, nämlich die Form der Durchdringungskurve der Bohrung durch die Wandung der Rohrleitung 10. Wie der Vergleich der Fig. 1 und 2 zeigt, fällt sie von je einem Kurvenscheitel 35 an der Stelle, an der die Bohrung 21 die zentrale Mantellinie des Rohrs schneidet, zu beiden Seiten zu der in Fig. 2 zu erkennenden Kurvensenke 36 ab. Dadurch liegt die durch den Flanschbund 15 getragene und geführte Dichtung 34 immer genau auf dem Bohrungsrand und dichtet den Rohranschlussstutzen 14 gegenüber dem Liner ab. Dazu wird der in die Bohrung 21 eingeführte Rohranschlussstutzen 14 ebenso wie die Bohrung gegenüber einem im Rohr strömenden Medium abgedichtet. Es kann also kein Medium an die Bohrungsschnittfläche herankommen und in einen Spalt zwischen dem Rohr 11 und dem Liner 12 eindringen, was zu einer Ablösung der Schichten führen könnte.

Zur Montage des Rohranschlusssystems 13 wird wie folgt verfahren: Der Rohranschlussstutzen 14 mit eingelegter oder angebrachter Dichtung 34 wird von einem offenen Rohrende oder einer anderen Öffnung der Rohrleitung 10 mittels eines an sich bekannten Röhrenaals mit einem Zugkopf, mit einer Einziehspirale mit einem Röhren-Roboter oder mit einem Seil durch das Rohrinnere an die Bohrung 21 heran- und eingeführt. Dabei richtet sich der Rohranschlussstutzen 14 in Folge der durch seine Abflachung 28 und die entsprechende Abflachung in der Rohrschelle gebildete Verdrehsicherung 29 exakt so aus, dass der Flanschbund 15 und damit die Dichtung 34 exakt auf der in Form der Durchdringungskurve geschwungenen Bohrungskante des Liners 12 aufliegt.

Danach wird eine den Rohranschlussstutzen umgebende Spannmutter 37 auf das Außengewinde 16 geschraubt. Sie liegt auf einer Spannfläche 58 der Rohrschelle 20 auf und spannt den Rohranschlussstutzen 14 mit dem Flanschbund 15 gegen die Innenseite des Liners 12. Dabei wird der ursprünglich kreisrunde Querschnitt der Dichtung 34 etwas oval verformt. Der Schenkel 33 der Rinne 32 kann dabei fast oder gänzlich an die Innenseite des Liners 12 heranreichen und so einen die Dichtung schützenden fast geschlossenen Dichtungskanal bilden. Danach kann über die Überwurfmutter 17 und Dichtung 18 das Anschlussrohr 19 oder andere Anschluss Teile stirnseitig an das jetzt äußere Ende des Rohranschlussstutzens 14 angebracht werden. Wesentlich ist, dass der Rohranschlussstutzen 14 passend zum Rohrdurchmesser der Rohrleitung 10 und seinem eigenen Durchmesser gefertigt wird, damit sein Flanschbund die aus diesen beiden Durchmessern sich ergebende Durchdringungskurve nachbildet. Ferner soll die Rohrschelle genau zentrisch zur Bohrung aufgesetzt werden.

Da es aufgrund der geeigneten Gestaltung möglich und sinnvoll ist, sowohl den Rohranschlussstutzen als auch weitere Teile des Rohranschlusssystems aus Kunststoffspritzguss zu fertigen, ist das Rohranschlusssystem nicht nur von der Montage, sondern auch von den benötigten Teilen her sehr ökonomisch.

Die im Folgenden anhand der Fig. 3 bis 12 beschriebenen Ausführungsformen der Erfindung ermöglichen es, den Rohranschlussstutzen 14 vom Äußeren der Rohrleitung 10 her zu montieren. Bei im Übrigen gleichem Aufbau der Rohrschelle etc. findet ein Rohranschlussstutzen 14 Verwendung, der aus zwei Komponenten unterschiedlicher Materialien zusammengesetzt ist. Der in Fig. 3 und 5 gezeigte Hauptkörper 40 des Rohranschlussstutzens 14 weist das Außengewinde 16 und den mittleren Führungsbereich 27 auf. Sein später dem Rohrinneren zugewandter Endbereich 41 ist jedoch in Längsrichtung mehrfach geschlitzt, so dass jeweils von Schlitzen 42 unterbrochene Stege 43 gebildet werden. Die Schlitze gehen auch durch den Flanschbund 15 hindurch, so dass die Stege eine nach außen gerichtete hakenförmige Gestalt haben. Der Hauptkörper 40 besteht aus einem zwar gestaltfesten, jedoch soweit flexiblen Material, vorzugsweise Kunststoff, dass die Stege sich nach innen biegen lassen, ohne bleibende Verformungen zu erleiden. Dazu sind die Stege auch in ihrer Dicke darauf reduziert, dass sie der durch die spätere Spannung bedingten Zugbeanspruchung widerstehen.

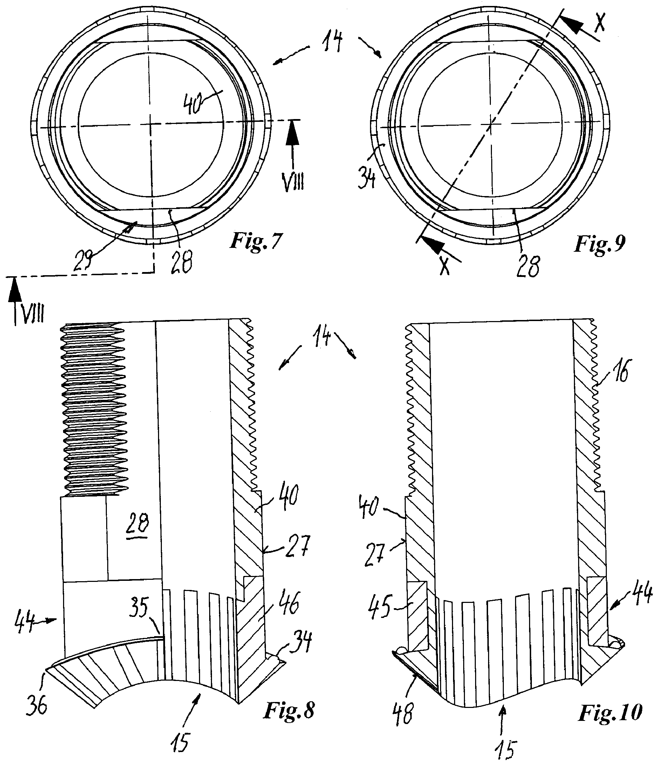

Fig. 4 und 6 zeigen eine zweite Komponente des Rohranschlussstutzens 14, nämlich einen Elastomer-Körper 44. Er ist so gestaltet, dass er den Hauptkörper 40 zu dem fertigen Rohranschlussstutzen 14 ergänzt, wie er in den Fig. 7 bis 10 gezeigt ist. Dementsprechend hat er einen Ringkörper 45, der den Abstand zwischen dem Führungsbereich 27 und dem Flanschbund ausfüllt und an seiner Innenseite Rippen 46 aufweist, die die Schlitze 42 und damit auch die Lücken in Flanschbund 15 ausfüllen. Auf der Dichtungsseite des Flanschbundes 15 hat der Elastomer-Körper 44 einen geschlossenen, umlaufenden Dichtungsbereich 47, der die Dichtung 34 bildet (siehe Fig. 8 und 10).

Diese Zeichnungsfiguren zeigen, dass die beiden Komponenten sich zu dem Rohranschlussstutzen ergänzen. Fig. 8 zeigt auf der rechten Zeichnungshälfte den Schnitt durch die Rippen 46. In diesem Sektor ist also der Endbereich 41 gänzlich aus Elastomer, während Fig. 10 den Schnitt durch den flexiblen Steg 43 das Hauptkörpers 40 zeigt. In diesem Bereich bildete der Elastomer-Körper 44 einen Ring um die relativ dünnen, flexiblen Arme des Stegs 43 und den Dichtungsbereich 47 mit der Dichtung 34, die als eine halbrunde umlaufende Rippe ausgebildet ist. Vorzugsweise sind Hauptkörper 40 und Elastomer-Körper 44 im 2-Komponenten-Spritzverfahren hergestellt, d.h., dass der Hauptkörper mit dem Elastomer-Körper umspritzt wird und eine Ummantelung 38 für den Hauptkörper bildet. Neben ihren Haupteigenschaften, nämlich Gestaltfestigkeit beim Hauptkörper und Elastizität beim Elastomer-Körper sind Materialwahl und Spritzparameter so getroffen, dass bei dem Spritzverfahren beide Komponenten eine Stoffschlüssigkeit eingehen, das heißt, dass sie sich bei den auftretenden Druck-, Zug-, und Scher-Beanspruchungen nicht voneinander trennen.

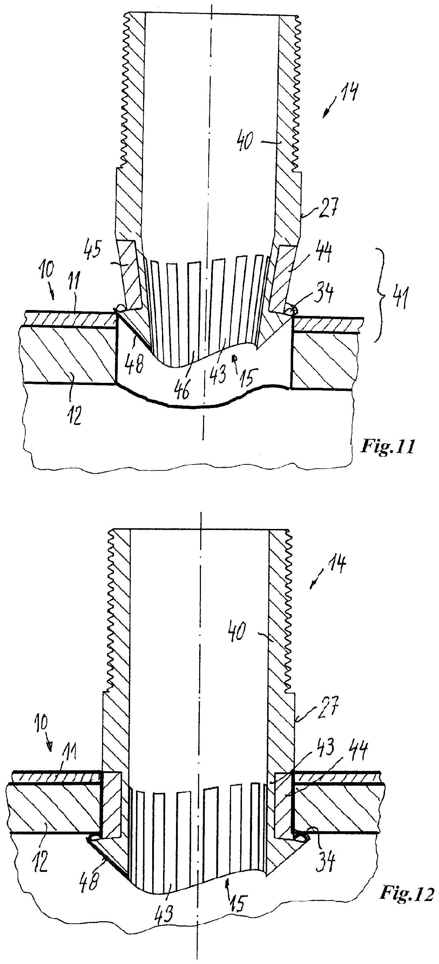

Der Flanschbund 15, also sowohl die Enden der Stege 43, als auch der Rippen 46, sind abgeschrägt, um eine Gleitfläche 48 zu schaffen. Wie Fig. 11 zeigt, wird der Endbereich 41 beim Einführen des Rohranschlussstutzens 14 in die Bohrung 21 durch die Gleitfläche 48 zusammengedrückt, um den Durchmesser des Flanschbundes auf den Bohrungsdurchmesser zu reduzieren. Dabei werden die Elastomer-Teile, also insbesondere die Rippen 46 zwischen den Stegen 43, elastisch verformend zusammengedrückt. Nachdem die Bohrung 21 durchquert ist, federt der Endbereich 41 wieder auseinander, so dass der Flanschbund 15 mit der Dichtung 34 den Bohrungsrand in dem Liner 12 hintergreift und durch Anspannen des Rohranschlussstutzen 14 mittels der Spannmutter 17 die Dichtung 34 wirksam wird. Der zylindrische Abschnitt des Elastomer-Körpers 44 liegt dann auch abdichtend an der Bohrungs-Innenfläche an. Eine solche Abdichtung ist zwar gegen das Medium im Rohr nicht nötig, jedoch gegen Eindringen von Feuchtigkeit von außen her nützlich.

Eine weitere vorteilhafte Variante kann ebenfalls anhand von Fig. 11 und 12 erläutert werden: der Rohranschlussstutzen 14 kann mit bereits verjüngtem Endbereich, wie in Fig. 11 gezeigt, hergestellt werden. Da nun der Rohranschlussstutzen 14 kräftefrei und passend in die Bohrung eingeführt werden kann, benötigt der Flanschbund auch nicht mehr die Gleitfläche 48, so dass dieser eine radiale Endfläche wie in Fig. 1 haben kann. Das ist vorteilhaft, weil dadurch der Querschnitt der Rohrleitung zehn weniger reduziert wird. Nach der Einführung des Rohranschlussstutzens mit dem Flanschbund durch die Bohrung kann eine Aufweitung bis zu einer Endposition entsprechend Fig. 12 durch eine nicht dargestellte dünnwandige zylindrische Hülse vorgenommen werden, die von außen her in den Rohranschlussstutzen 14 eingeführt und in ihrer Lage fixiert wird. Dabei wird der Elastomer-Körper 44 gedehnt, bleibt aber dicht.

**Bezugszeichenliste**

| | |
|---|---|
| Rohrleitung | 10 |
| Rohr | 11 |
| Liner | 12 |
| Rohranschlusssystem | 13 |
| Rohranschlussstutzen | 14 |
| Flanschbund | 15 |
| Außengewinde | 16 |
| Überwurfmutter | 17 |
| Stirndichtung | 18 |
| Anschlussrohr | 19 |
| Rohrschelle | 20 |
| Bohrung | 21 |
| Spannband | 22 |
| Gewindestange | 23 |
| Führung | 24 |
| Arme | 25 |
| Spannmutter | 26 |
| mittlerer Bereich | 27 |
| Abflachung | 28 |
| Verdrehsicherung | 29 |
| Achse | 30 |
| Rohrachse | 31 |
| Rinne | 32 |
| Schenkel | 33 |
| Dichtung | 34 |
| Kurvenscheitel | 35 |
| Kurvensenke | 36 |
| Spannmutter | 37 |
| Ummantelung | 38 |
| Hauptkörper | 40 |
| Endbereich | 41 |
| Schlitze | 42 |
| Stege | 43 |
| Elastomer-Körper | 44 |
| Ringkörper | 45 |
| Rippen | 46 |
| Dichtungsbereich | 47 |
| Gleitfläche | 48 |
| Spannfläche | 58 |

## Patentansprüche

1. Rohranschlusssystem (13) mit einer außen auf eine mit einem Liner (12) versehene Rohrleitung (10) aufzusetzenden Rohrschelle (20), einem eine Bohrung (21) in der durch den Liner (12) mehrschichtigen Wandung der Rohrleitung (10) im montierten Zustand des Rohranschlusssystems (13) durchdringenden, mit einem Anschluss (19) verbindbaren Rohranschlussstutzen (14), der einen Flanschbund (15) von größerem Durchmesser als die Bohrung (21) aufweist, und mit einer Dichtung (34), die im montierten Zustand des Rohranschlusssystems (13) zwischen der Innenwandung der Rohrleitung (10) und dem Rohranschlussstutzen (14) angeordnet ist, wobei der Flanschbund (15) an seiner im montierten Zustand des Rohranschlusssystems (13) dem Liner (12) zugekehrten Seite in Umfangsrichtung des Flanschbundes (15) die Form einer Durchdringungskurve von der Bohrung (21) in der Rohrleitung (10) hat und wobei der Rohranschlussstutzen (14) eine Verdrehsicherung (29) gegenüber der Rohrschelle (20) aufweist, **dadurch gekennzeichnet, dass** der Flanschbund (15) an seiner dem Liner (12) zugekehrten Seite eine die nach Art eines O-Ringes ausgebildete Dichtung (34) aufnehmende Rinne (32) ist, wobei der äußere Schenkel (33) der Rinne (32) ausgebildet ist, die Dichtung (34) im montierten und abdichtenden Zustand im Wesentlichen abzudecken.

2. Rohranschlusssystem nach Anspruch 1, **dadurch gekennzeichnet, dass** der Rohranschlussstutzen (14) ein Außengewinde (16) aufweist, über das eine sich auf der Rohrschelle (20) abstützende Spannmutter (37) den Rohranschlussstutzen (14) mit seinem Flanschbund (15) über die Dichtung (34) und im montierten Zustand des Rohranschlusssystems (13) an den Liner (12) anpresst, wobei ggf. der Anschluss (19) mittels einer auf das Außengewinde (16) aufgeschraubten Überwurfmutter (17) an den Rohranschlussstutzen (14) anschließbar ist.

3. Rohranschlusssystem nach einem der vorhergehenden Ansprüche, **dadurch gekennzeichnet, dass** die Verdrehsicherung (29) vorzugsweise einander gegenüberliegende Abflachungen (28) an dem Rohranschlussstutzen (14) aufweist, die mit entsprechenden Flächen an der Rohrschelle (20) zusammenwirken.

4. Rohranschlusssystem nach einem der vorhergehenden Ansprüche, **dadurch gekennzeichnet, dass** der Rohranschlussstutzen (14) und ggf. weitere Teile des Rohranschlusssystems (13) aus Kunststoffspritzguss bestehen.

5. Rohranschlusssystem nach einem der vorhergehenden Ansprüche, **dadurch gekennzeichnet, dass** der Rohranschlussstutzen (14) mit aufgesetzter Dichtung (34) zur Einführung in die Bohrung (21) vom Inneren der Rohrleitung (10) her ausgebildet ist.

6. Anschlusssystem nach einem der Ansprüche 1 bis 4, **dadurch gekennzeichnet, dass** der Rohranschlussstutzen (14) in seinem im montierten Zustand des Rohranschlusssystems (13) dem Rohrinneren zugekehrten Endbereich (41) im Durchmesser flexibel veränderlich ist.

7. Rohranschlusssystem nach Anspruch 6, **dadurch gekennzeichnet, dass** der Rohranschlussstutzen an dem den Flanschbund (15) aufweisenden Endbereich (41) zur Bildung flexibler Stege (43) mit Schlitzen (42) versehen ist.

8. Rohranschlusssystem nach Anspruch 6, **dadurch gekennzeichnet, dass** der Rohranschlussstutzen (14) an seinem Endbereich (41) Gleitflächen (48) mit Einführungs-Abschrägungen aufweist, die dazu ausgebildet sind, beim Einführen in die Bohrung (21) im Kontakt mit der Bohrungswandung den Flanschbund (15) auf den Bohrungsdurchmesser zusammenzudrücken.

9. Rohranschlusssystem nach einem der Ansprüche 6 bis 8, **dadurch gekennzeichnet, dass** der Rohranschlussstutzen (14) an dem Endbereich (41) mit einer weichelastischen Ummantelung (38) versehen ist.

10. Rohranschlusssystem nach Anspruch 9, **dadurch gekennzeichnet, dass** die Ummantelung (38) wenigstens eines der folgenden Merkmale aufweist:
10.1 sie umgibt den Flanschbund (15) an der dichtungsbildenden Seite und bildet die Dichtung (34),
10.2 sie füllt zumindest die Schlitze (42) aus,
10.3 sie ist mit dem Rohranschlussstutzen (14) dauerhaft haftend stoffschlüssig verbunden,
10.4 sie ist im 2-Komponenten-Spritzvorgang hergestellt.

11. Rohranschlusssystem nach einem der Ansprüche 6 bis 10, **dadurch gekennzeichnet, dass** der im Durchmesser flexible Endbereich (41) des Rohranschlussstutzens (14) im einbaubereiten Zustand derart nach innen verjüngt ist, dass der Flanschbund (15) einen Außendurchmesser entsprechend dem Bohrungsdurchmesser hat.

12. Rohranschlusssystem nach einem der vorhergehenden Ansprüche, **dadurch gekennzeichnet, dass** in den Rohranschlussstutzen (14) eine ggf. dessen Endbereich (41) aufweisende Innenhülse einführbar ist, deren Außendurchmesser am Innendurchmesser des Rohranschlussstutzens (14) anliegt und diese in einer Formschluss-Position festgelegt, in der der Flanschbund (15) einen größeren Außendurchmesser hat als die Bohrung (21).

13. Verfahren zur Herstellung eines Rohranschlusses nach einem der Ansprüche 1 bis 5, **dadurch gekennzeichnet, dass** der Rohranschlussstutzen (14) über ein Ende oder eine Öffnung der Rohrleitung (10) mittels eines Röhrenaals mit Zugkopf, einer Einziehspirale, eines Röhren-Roboters oder eines Seils in eine in die Bohrung einführbare Position gebracht wird.

14. Verfahren zur Herstellung eines Rohranschlusses nach einem der Ansprüche 6 bis 12, **dadurch gekennzeichnet, dass** der Flanschbund (15) des Rohranschlussstutzens (14) über eine an seinem Endbereich (41) vorgesehene Gleitfläche (48) mit Einführungs-Abschrägungen beim Einführen in die Bohrung (21) im Kontakt mit der Bohrungswandung auf den Bohrungsdurchmesser zusammendrückt wird.

15. Verfahren zur Herstellung eines Rohranschlusses nach Anspruch 9 bis 12, **dadurch gekennzeichnet, dass** der Rohranschlussstutzen (14) im an seinem Endbereich (41) verjüngten Zustand in die Bohrung (21) eingeführt wird, durch Einführung der Innenhülse von außen her auf die Formschlussposition unter Dehnung der Ummantelung (38) aufgeweitet und danach unter Axialspannung nach außen in eine den Flanschbund (15) über die als Dichtung (34) wirkende Ummantelung (38) an den Liner (12) anpressende, abdichtende Position gebracht wird.

## Claims

1. Pipe connection system (13) having a pipe clamp (20) to be placed outside on a pipe line (10) provided with a liner (12), a pipe connection socket (14), connectable to a connector (19), penetrating a bore (21) in the, due to the liner (12), multi-layer wall of the pipe line (10) in the mounted state of the pipe connection system (13), the pipe connection socket (14) having a flange collar (15) with a diameter greater than the bore (21), and having a seal (34) which is arranged between the inner wall of the pipe line (10) and the pipe connection socket (14) in the mounted state of the pipe connection system (13), wherein the flange collar (15) has at its side facing the liner (12) in the mounted state of the pipe line system (13), has the shape of a penetration curve of the bore (21) in the pipe line (10) in a circumferential direction of the flange collar (15) , and wherein the pipe connection socket (14) has an anti-rotation device (29) with respect to the pipe clamp (20), **characterized in that** the flange collar (15) is a groove (32) on its side facing the liner (12) for accommodating the seal (34) designed as a type of O-ring, wherein the outer leg (33) of the groove (32) is designed to substantially cover the seal (34) in the mounted and sealing state.

2. Pipe connection system according to claim 1, **characterized in that** the pipe connection socket (14) has an external thread (16), via which a clamping nut (37) supported on the pipe clamp (20) presses the pipe connection socket (14) with its flange collar (15) over the seal (34) and on the liner (12) in the mounted state of the pipe connection system (13), wherein, if necessary, the connector (19) is connectable to the pipe connection socket (14) by means of union nut (17) screwed onto the outer thread (16).

3. Pipe connection system according to one of the preceding claims, **characterized in that** the anti-rotation device (29) preferably has flattened portions (28) lying opposite one another on the pipe connection socket (14) and interacting with corresponding surfaces on the pipe clamp (20).

4. Pipe connection system according to one of the preceding claims, **characterized in that** the pipe connection socket (14) and, if necessary, further parts of the pipe connection system (13) consist of plastic injection molding.

5. Pipe connection system according to one of the preceding claims, **characterized in that** the pipe connection socket (14) with put on seal (34) is designed for insertion into the bore (21) from the inside of the pipe line (10).

6. Pipe connection system according to one of claims 1 to 4, **characterized in that** the pipe connection socket (14) is flexibly variable in diameter in its end area (41) facing the pipe interior in the mounted state of the pipe connection system (13).

7. Pipe connection system according to claim 6, **characterized in that** the pipe connection adapter is provided with slots (42) to form flexible webs (43) in the end area (41) comprising the flange collar (15).

8. Pipe connection system according to claim 6, **characterized in that** the pipe connection socket (14) has sliding surfaces (48) in its end area (41) with insertion bevels which are designed to compress the flange collar (15) to the bore diameter during insertion into the bore (21) and in contact with the bore wall.

9. Pipe connection system according to one of claims 6 to 8, **characterized in that** the pipe connection socket (14) is provided with a soft elastic sheath (38) at the end area (41).

10. Pipe connection system according to claim 9, **characterized in that** the sheath (38) has at least one of the following features:
10.1 it surrounds the flange collar (15) on the side forming the seal and forms the seal (34),
10.2 it fills in at least the slots (42),
10.3 it is permanently, adhesively, materially connected to the pipe connection socket (14),
10.4 it is produced in a 2-component injection molding process.

11. Pipe connection system according to one of claims 6 to 10, **characterized in that** the end area (41), which is flexible in diameter, of the pipe connection socket (14) is tapered inward in the ready-for-installation state in such a way that the flange collar (15) has an outer diameter corresponding to the bore diameter.

12. Pipe connection system according to one of the preceding claims, **characterized in that** an inner sleeve is insertable into the pipe connection socket (14), the inner sleeve, if necessary, comprising its end area (41), the outer diameter of the inner sleeve adjoining the inner diameter of the pipe connection socket (14) and fixes it in a form-fit position, in which the flange collar (15) has a larger outer diameter than the bore (21) .

13. Method for producing a pipe connection system according to one of claims 1 to 5, **characterized in that** the pipe connection socket (14) is moved by means of a duct rodder with a traction head, a fish tape, a pipe robot or a rope into a position insertable into the bore via an end or an opening of the pipe line (10).

14. Method for producing a pipe connection system according to one of claims 6 to 12, **characterized in that** the flange collar (15) of the pipe connection socket (14) is compressed in contact with the bore wall to the bore diameter during insertion into the bore (21) via a sliding surface (48) with insertion bevels provided on its end area (41).

15. Method for producing a pipe connection system according to one of claims 9 to 12, **characterized in that** the pipe connection socket (14) is being inserted into the bore (21) in the tapered state at its end area (41), is expanded to the positive-locking position by stretching the sheath (38) by inserting the inner sleeve from outside, and afterwards is brought into a position pressing on and sealing the flange collar (15) on the liner (12) under axial tension toward the outside via the sheath (38) acting as a seal (34).

## Revendications

1. Système de raccordement de tuyaux (13) avec un collier de tuyau (20) à poser extérieurement sur une conduite (10) dotée d'un revêtement (12), un embout de raccordement de tuyaux (14) pouvant être relié à un raccord (19), pénétrant dans la paroi multicouche de la conduite (10) à travers le revêtement (12) à l'état monté du système de raccordement de tuyaux (13), qui comporte un collet de bride (15) d'un diamètre plus grand que l'alésage (21) et avec un joint d'étanchéité (34), qui est disposé à l'état monté du système de raccordement de tuyaux (13) entre la paroi intérieure de la conduite (10) et l'embout de raccordement de tuyaux(14), sachant que le collet de bride (15) possède à l'état monté du système de raccordement de tuyaux (13) sur son côté tourné vers le revêtement (12) dans la direction périphérique du collet de bride (15), la forme d'une courbe de pénétration de l'alésage (21) dans la conduite (10) et sachant que l'embout de raccordement de tuyaux (14) comporte une sécurité anti-rotation (29) par rapport au collier de tuyau (20), **caractérisé en ce que** le collet de bride (15) sur son côté tourné vers le revêtement (12) est un conduit (32) logeant le joint d'étanchéité (34) constitué à la manière d'un joint torique, sachant que la branche extérieure (33) du conduit (32) est constituée pour couvrir pour l'essentiel le joint d'étanchéité (34) à l'état monté et étanchéifié.

2. Système de raccordement de tuyaux selon la revendication 1, **caractérisé en ce que** l'embout de raccordement de tuyaux (14) comporte un filetage extérieur (16) par le biais duquel un écrou de serrage (37) s'appuyant sur le collier de tuyau (20) comprime l'embout de raccordement de tuyaux (14) avec son collet de bride (15) sur le joint d'étanchéité (34) et à l'état monté du système de raccordement de tuyaux (13) sur le revêtement (12), sachant éventuellement que le raccord (19) peut être raccordé à l'embout de raccordement de tuyaux (14) au moyen d'un écrou de raccordement (17) vissé sur le filetage extérieur (16).

3. Système de raccordement de tuyaux selon l'une quelconque des revendications précédentes, **caractérisé en ce que** la sécurité anti-rotation (29) comporte de préférence des méplats (28) sur l'embout de raccordement de tuyaux (14), opposés les uns aux autres, qui coopèrent avec des surfaces correspondantes sur le collier de tuyau (20).

4. Système de raccordement de tuyaux selon l'une quelconque des revendications précédentes, **caractérisé en ce que** l'embout de raccordement de tuyaux (14) et éventuellement d'autres pièces du système de raccordement de tuyaux (13) sont composées de pièces en matière plastique moulées par injection.

5. Système de raccordement de tuyaux selon l'une quelconque des revendications précédentes, **caractérisé en ce que** l'embout de raccordement de tuyaux (14) est constituée avec un joint d'étanchéité (34) mis en place pour introduction dans l'alésage (21) depuis l'intérieur de la conduite (10).

6. Système de raccordement de tuyaux selon l'une quelconque des revendications 1 à 4, **caractérisé en ce que** l'embout de raccordement de tuyaux (14) est modifiable en diamètre de façon flexible dans sa zone d'extrémité (41) tournée vers l'intérieur du tuyau à l'état monté du système de raccordement de tuyaux (13).

7. Système de raccordement de tuyaux selon la revendication 6, **caractérisé en ce que** l'embout de raccordement de tuyaux est dotée de fentes (42) sur la zone d'extrémité (41) comportant le collet de bride (15) pour former des nervures flexibles (43).

8. Système de raccordement de tuyaux selon la revendication 6, **caractérisée en ce que** l'embout de raccordement de tuyaux (14) comporte sur sa zone d'extrémité (41) des surfaces de glissement (48) avec des chanfreins d'introduction, qui sont constitués pour comprimer le collet de bride (15) sur le diamètre d'alésage lors de l'introduction dans l'alésage (21) en contact avec la paroi d'alésage.

9. Système de raccordement de tuyaux selon l'une quelconque des revendications 6 à 8, **caractérisé en ce que** l'embout de raccordement de tuyaux (14) est dotée sur sa zone d'extrémité (41) d'une enveloppe (38) élastique souple.

10. Système de raccordement de tuyaux selon la revendication 9, **caractérisé en ce que** l'enveloppe (38) comporte au moins une des caractéristiques suivantes :
10.1 elle entoure le collet de bride (15) sur le côté formant joint d'étanchéité et forme le joint d'étanchéité (34),
10.2 elle remplit au moins les fentes (42),
10.3 elle est reliée par conformité de matière adhérant de façon durable à l'embout de raccordement de tuyaux (14),
10.4 elle est fabriquée dans une opération d'injection à 2 composants.

11. Système de raccordement de tuyaux selon l'une quelconque des revendications 6 à 10, **caractérisé en ce que** la zone d'extrémité (41) flexible en diamètre de l'embout de raccordement de tuyaux (14) à l'état monté est réduite vers l'intérieur de telle sorte que le collet de bride (15) à un diamètre extérieur correspondant au diamètre d'alésage.

12. Système de raccordement de tuyaux selon l'une quelconque des revendications précédentes, **caractérisé en ce qu'**un manchon intérieur comportant éventuellement la zone d'extrémité (41) de celui-ci, peut-être introduit dans l'embout de raccordement de tuyaux (14), dont le diamètre extérieur s'applique au diamètre intérieur de l'embout de raccordement de tuyaux (14) et fixe celui-ci dans une position par conformité de forme dans laquelle le collet de bride (15) à un diamètre extérieur plus grand que l'alésage (21).

13. Procédé de fabrication d'un raccord de tuyaux selon l'une quelconque des revendications 1 à 5, **caractérisé en ce que** l'embout de raccordement de tuyaux (14) est placée dans une position insérable dans l'alésage sur une extrémité ou une ouverture de la conduite (10) au moyen d'un système de tirage Röhrenaal avec tête de traction, d'une spirale d'introduction, d'un robot pour tuyaux ou d'un câble

14. Procédé de fabrication d'un raccord de tuyaux selon l'une quelconque des revendications 6 à 12, **caractérisé en ce que** le collet de bride (15) de l'embout de raccordement de tuyaux (14) est comprimé sur une surface de glissement (48) prévue sur sa zone d'extrémité (41) avec des chanfreins d'introduction lors de l'introduction dans l'alésage (21) en contact avec la paroi d'alésage sur le diamètre d'alésage.

15. Procédé de fabrication d'un raccord de tuyaux selon les revendications 9 à 12, **caractérisé en ce que** l'embout de raccordement de tuyaux (14) est introduite dans l'alésage (21) à l'état réduit sur sa zone d'extrémité (41), est élargie de l'extérieur par introduction du manchon intérieur à la position par conformité de forme par expansion de l'enveloppe (38) et ensuite placée par contrainte axiale vers l'extérieur dans une position d'étanchéité, comprimant le collet de bride (15) au revêtement (12) sur l'enveloppe (38) agissant comme joint d'étanchéité (34).
